# EUROPEAN PATENT SPECIFICATION

(11) **EP 4 119 407 B1**
(45) Date of publication and mention of the grant of the patent: **01.04.2026**
(21) Application number: 22183468.2
(22) Date of filing: 07.07.2022
(51) Int. Cl.: B60T 13/74, B60T 17/22

(54) **ELECTRIC HYDRAULIC BRAKE AND CONTROL METHOD THEREFOR**
ELEKTRISCHE HYDRAULISCHE BREMSE UND STEUERVERFAHREN DAFÜR
FREIN HYDRAULIQUE ÉLECTRIQUE ET SON PROCÉDÉ DE COMMANDE

(30) Priority: 12.07.2021 KR 20210091228
(43) Date of publication of application: 18.01.2023
(73) Proprietor: Hyundai Mobis Co., Ltd., Gangnam-gu Seoul (KR)
(72) Inventor: AHN, Sung Ki, 16925 Yongin-si (KR); HA, Byoung Woo, 16951 Yongin-si (KR); YUN, Chun Sic, 17003 Yongin-si (KR); YUN, Seung Hyun, 17054 Yongin-si (KR)
(74) Representative: Frenkel, Matthias Alexander

(56) References cited:
- DE-A1- 102012 205 862
- DE-A1- 102017 216 118
- US-A1- 2017 282 877
- US-A1- 2018 065 611

## Description

### CROSS-REFERENCE TO RELATED APPLICATIONS

This application is based on, and claims priority from, Korean Patent Application Number 10-2021-0091228, filed July 12, 2021.

### TECHNICAL FIELD

The present disclosure relates to an electric hydraulic brake and a control method thereof.

### BACKGROUND

The content described in this section merely provides the background information on the present disclosure and does not constitute the prior art.

An electric hydraulic brake uses an electric motor to generate hydraulic pressure and transmits the hydraulic pressure to wheel cylinders to generate braking force in each wheel cylinder. The electric hydraulic brake makes it easy to individually control the braking force generated in each wheel brake, so that a function such as an electronic stability control (ESC) system or an anti-lock brake system (ABS) can be easily implemented.

The ESC is intended to stably maintain the posture of a vehicle when the posture of the vehicle is unstable during driving. The cause of the unstable posture of the vehicle includes a road condition with a slippery road surface due to rain, snow or sand, motion inertia such as abrupt zigzag driving, etc. The ESC system controls the torque of a brake and an engine in a state where the posture of the vehicle is dangerous, thus stably maintaining the posture of the vehicle.

When a main brake system is not normally operated, an autonomous driving vehicle secures a fail-safe function using an auxiliary brake system disposed between the main brake system and the plurality of wheel brakes.

In the case where the auxiliary brake system is added to the main brake system to implement redundancy, the layout of the brake system may become complicated, and the cost and weight of the entire brake system may be increased.

DE 10 2012 205862 A1 discloses a method of improving a brake system of the type stated at the outset in such a way that the vehicle driver can comfortably achieve adequate service braking deceleration despite failure of the pressure supply device. In the system, each of the pump of the boost module, the hydraulic actuating unit, the pressure supply device is connected via the same line to the reservoir.

DE 10 2017 216118 A1 discloses an improved method for operating a brake installation having a first brake system and a second brake system which is connected hydraulically in series between the first brake system and two of the at least four wheel brakes, and of providing a corresponding brake installation. The second brake system includes a pressure medium reservoir between the pump and the reservoir.

US 2018/065611 A1 discloses a brake control device and a control method, which are capable of improving responsiveness of vehicle braking at a low temperature. The device includes a hydraulic pressure supply device between the master cylincer and the wheel brake units. The hydraulic pressure supply device has pumps and reservoirs for supplyin brake fluid to the pumps.

### SUMMARY

According to at least one embodiment, the present disclosure provides an electric hydraulic brake including: a plurality of wheel brakes supplying braking force to wheels of a vehicle; a main braking unit including a reservoir which stores brake oil, and a master cylinder configured to form pressure of the brake oil in conjunction with a main brake motor; and a hydraulic controller including at least one pump configured to pump the brake oil in conjunction with an auxiliary brake motor, and configured to selectively transmit the pressure of the brake oil formed in the master cylinder or the pump to the plurality of wheel brakes. The hydraulic controller includes at least one auxiliary flow path which is connected at a first end thereof to the reservoir and is connected at a second end thereof to an inlet of the pump to transmit hydraulic pressure from the reservoir to the pump directly through the at least one auxiliary flow path, wherein the at least one auxiliary flow path is configured to directly guide the brake oil supplied from the reservoir to the pump without passing through the master cylinder.

According to at least one embodiment, the present disclosure provides a method of controlling an electric hydraulic brake according to the present invention. The method includess: a transmission step of transmitting a brake signal to a first controller and a second controller, when the brake signal is generated; a determination step of determining whether a main braking unit is normally operated according to the brake signal; a main brake step of forming braking force in a plurality of wheel brakes by operating the main braking unit, when it is determined that the main braking unit is normally operated; and an auxiliary brake step of forming braking force in the plurality of wheel brakes by controlling the hydraulic controller, when it is determined that the main braking unit is not normally operated.

### BRIEF DESCRIPTION OF THE DRAWINGS

FIG. 1 is a hydraulic circuit diagram of an electric hydraulic brake according to an embodiment of the present disclosure.
FIG. 2 is a flowchart illustrating a method of controlling an electric hydraulic brake according to an embodiment of the present disclosure.
FIG. 3 is a hydraulic circuit diagram illustrating a direction in which brake oil flows when a main braking unit is normally operated in a braking process of an electric hydraulic brake according to an embodiment of the present disclosure.
FIG. 4 is a hydraulic circuit diagram illustrating a direction in which brake oil flows when a main braking unit is abnormally operated in a braking process of an electric hydraulic brake according to an embodiment of the present disclosure.
FIG. 5 is a hydraulic circuit diagram illustrating a direction in which brake oil flows when a main braking unit is normally operated in a depressurization process of an electric hydraulic brake according to an embodiment of the present disclosure.
FIG. 6 is a hydraulic circuit diagram illustrating a direction in which brake oil flows when a main braking unit is abnormally operated in a depressurization process of an electric hydraulic brake according to an embodiment of the present disclosure.
FIG. 7 is a hydraulic circuit diagram illustrating a direction in which brake oil flows when a main braking unit and a hydraulic controller are abnormally operated in a braking process of an electric hydraulic brake according to an embodiment of the present disclosure.

### DETAILED DESCRIPTION

In view of the above, the present disclosure provides an electric hydraulic brake, in which a main braking unit and a hydraulic controller are formed in a one-box, thus enhancing the cost competitiveness of the electric hydraulic brake and securing required performance.

The problems to be solved by the present disclosure are not limited to the above-mentioned problems, and other problems which are not mentioned will be clearly understood by those skilled in the art from the following description.

Hereinafter, some embodiments of the present disclosure will be described in detail with reference to the accompanying drawings. In the following description, like reference numerals preferably designate like elements, although the elements are shown in different drawings. Further, in the following description of some embodiments, a detailed description of related known components and functions when considered to obscure the subject of the present disclosure will be omitted for the purpose of clarity and for brevity.

Additionally, alphanumeric codes such as first, second, i), ii), (a), (b), etc., in numbering components are used solely for the purpose of differentiating one component from the other but not to imply or suggest the substances, the order, or sequence of the components. Throughout this specification, when parts "include" or "comprise" a component, they are meant to further include other components, not excluding thereof unless there is a particular description contrary thereto. The terms such as 'unit', 'module', and the like refer to one or more units for processing at least one function or operation, which may be implemented by hardware, software, or a combination thereof.

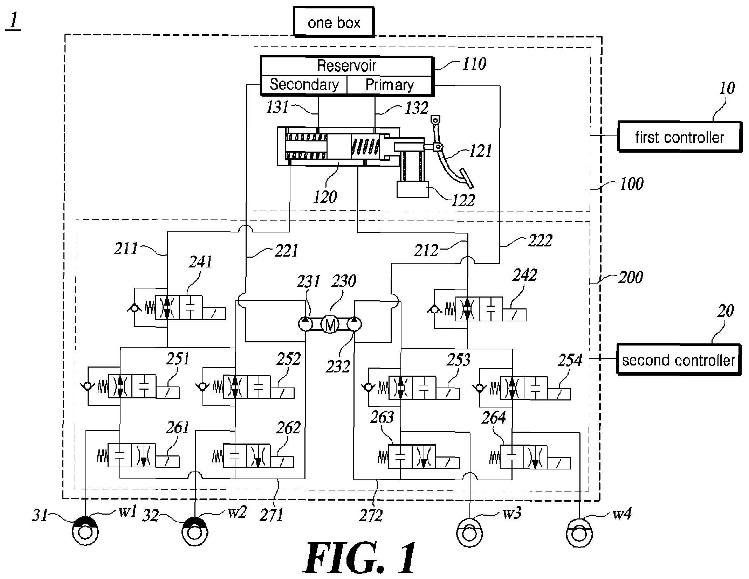

FIG. 1 is a hydraulic circuit diagram of an electric hydraulic brake according to an embodiment of the present disclosure.

Referring to FIG. 1, an electric hydraulic brake 1 according to an embodiment of the present disclosure may include all or some of a plurality of wheel brakes w1, w2, w3, and w4 which supply braking force to wheels of a vehicle, a main braking unit 100, a hydraulic controller 200, a first controller 10, and a second controller 20.

The main braking unit 100 includes a main brake motor 122, a master cylinder 120 configured to change the pressure of brake oil in conjunction with the main brake motor 122, a reservoir 110 storing the brake oil, and a plurality of supply flow paths 131 and 132 supplying the brake oil from the reservoir 110 to the master cylinder 120. In an embodiment of the present disclosure, the main brake motor 122 may be an electric booster.

The hydraulic controller 200 includes an auxiliary brake motor 230, a plurality of pumps 231 and 232 configured to change the pressure of the brake oil in conjunction with the auxiliary brake motor 230, one or more main flow paths 211 and 212 configured to transmit the hydraulic pressure of the brake oil from the master cylinder 120 to the plurality of wheel brakes w1, w2, w3, and w4, one or more auxiliary flow paths 221 and 222 directly connecting the reservoir 110 and the pumps 231 and 232 to transmit the brake oil, and one or more valves configured to selectively transmit the pressure of the brake oil formed in the master cylinder 120 or the pumps 231 and 232 to the plurality of wheel brakes w1, w2, w3, and w4.

In an embodiment of the present disclosure, a housing of the main braking unit 100 and a housing of the hydraulic controller 200 may not be coupled by a brake pipe but may be directly physically coupled to each other. In another embodiment, the hydraulic circuit and the components of the main braking unit 100 and the hydraulic controller 200 may be contained in one housing to form the one-box. Since the electric hydraulic brake is configured in the shape of the one-box, the number of valves may be reduced, and an accumulator and a check valve may be eliminated, thus saving cost. Further, the brake piping layout can be simplified.

The first controller 10 is configured to control the main brake motor 122 according to the brake input. The second controller 20 is configured to control the auxiliary brake motor 230 according to the brake input. The first controller 10 and the second controller 20 may be configured to send an electrical signal to an Electronic Parking Brake (EPB). However, the present disclosure is not limited to such a configuration. For example, the first controller 10 may be configured to control the main brake motor 122 and the auxiliary brake motor 230 according to the brake input. Herein, the brake input may be understand as an electronic signal, for example, a pedal sensing signal (PSS), which is generated based on the brake signal provided from a user's pedal input or a separate autonomous driving device.

The hydraulic controller 200 is in fluid communication with the reservoir 110, the master cylinder 120, the pumps 231 and 232, the plurality of wheel brakes w1, w2, w3, and w4, and responds to the signal of the first controller or the second controller. The hydraulic controller 200 is configured to change an internal flow path, namely, a path on which the hydraulic pressure acts or along which the brake oil flows between the reservoir 110, the master cylinder 120, the pumps 231 and 232, and the plurality of wheel brakes w1, w2, w3, and w4.

The plurality of wheel brakes w1, w2, w3, and w4 are configured to apply the braking force to the wheels of the vehicle using the hydraulic pressure. Each of the wheel brakes w1, w2, w3, and w4 may be a caliper brake. The plurality of wheel brakes w1, w2, w3, and w4 may be selectively in fluid communication with at least one of the reservoir 110, the master cylinder 120, and the pumps 231 and 232 using the hydraulic controller 200. For example, the hydraulic pressure generated in the master cylinder 120 or the pumps 231 and 232 may be applied to the plurality of wheel brakes w1, w2, w3, and w4 using the hydraulic controller 200. The plurality of wheel brakes w1, w2, w3, and w4 may apply the braking force corresponding to the hydraulic pressure to the wheels of the vehicle.

The master cylinder 120 is configured to change the pressure of the brake oil in response to the signal of the first controller 10. The master cylinder 120 has a hollow structure therein. The master cylinder 120 includes a piston disposed therein, and two hydraulic chambers partitioned by the piston. The piston is configured to move to one side as the main brake motor 122 is rotated, that is, to reciprocate and translate between the hydraulic chambers. When the main brake motor is moved clockwise or counterclockwise in response to the signal of the first controller 10, the piston may move to one side or the other side to press the brake oil filled in the two hydraulic chambers.

The pumps 231 and 232 are configured to change the pressure of the brake oil in response to the signal of the second controller 20. The pumps 231 and 232 may have the structure of an oil pump. According to the present invention, the pumps are configured to pump the brake oil in conjunction with the rotation of the auxiliary brake motor 230 as the auxiliary brake motor 230 is operated in response to the signal of the second controller 20. The flow path of the brake oil passing through the pumps 231 and 232 may lead to the plurality of wheel brakes w1, w2, w3, and w4 using the hydraulic controller 200.

The hydraulic controller 200 of the electric hydraulic brake 1 according to an embodiment of the present disclosure includes all or some of a plurality of traction control valves 241 and 242, a plurality of inlet valves 251 to 254, and a plurality of outlet valves 261 to 264, which are related to the operation of the master cylinder 120 and the pumps 231 and 232. The traction control valves 241 and 242 and the inlet valves 251 to 254 may be a normal open type solenoid valve, while the outlet valves 261 to 264 may be a normal close type solenoid valve.

The hydraulic controller 200 includes four pairs of inlet valves 251 to 254 and outlet valves 261 to 264 disposed on the brake flow path through which the brake oil is directly supplied to or discharged from each of the wheel brakes w1, w2, w3, and w4. Further, the hydraulic controller 200 includes the first traction control valve 241 and the second traction control valve 242 for distributing the hydraulic pressure generated from the master cylinder 120 onto each brake flow path. The traction control valves 241 and 242 are configured to open or close the main flow paths 211 and 212 between the master cylinder 120 and the plurality of wheel brakes w1, w2, w3, and w4, and to regulate hydraulic pressure transmitted to the plurality of wheel brakes w1, w2, w3, and w4.

The plurality of valves are configured to independently control the braking force of the plurality of wheel brakes w1, w2, w3, and w4, respectively. For example, the valves are configured to implement the functions of the ABS (Anti-lock Brake System), TCS (Traction Control system), and ESC (Electronic Stability Control).

The hydraulic controller 200 of the electric hydraulic brake 1 according to the present invention includes a plurality of auxiliary flow paths 221 and 222 which directly guide the brake oil supplied from the reservoir 110 to the pumps 231 and 232 without passing through the master cylinder 120. The hydraulic controller 200 may include a plurality of return flow paths 271 and 272 which directly guide the brake oil to the reservoir 110 without passing through the master cylinder 120 when the electric hydraulic brake 1 is depressurized.

When the master cylinder 120 or the first controller 10 malfunctions, the auxiliary brake motor 230 of the pumps 231 and 232 is operated in response to the signal of the second controller 20. The pumps 231 and 232 operated in conjunction with the auxiliary brake motor 230 transmit the brake oil from the reservoir 110 to the plurality of wheel brakes w1, w2, w3, and w4 using the auxiliary flow paths 221 and 222. The brake oil is transmitted to the plurality of wheel brakes w1, w2, w3, and w4, so that effective auxiliary braking may be achieved by electronic control in an auxiliary braking situation.

Further, when the master cylinder 120 or the first controller 10 malfunctions in a situation where a brake pedal is released, the outlet valves 261 to 264 are controlled in response to the signal of the second controller 20, and the brake oil is transmitted to the reservoir 110 using the return flow paths 271 and 272 without passing through the master cylinder 120.

In consideration of the possibility that a device performing the function of the electric hydraulic brake may malfunction, the possibility that a problem occurs due to the malfunction of the electric hydraulic brake may be eliminated by further including an additional device having a similar function. In other words, a brake device in which redundancy is ensured can be realized. For example, even if the malfunction of the main braking unit occurs in a situation where a driver's driving is excluded or driving attention is reduced, such as smart cruise control or autonomous driving, it is possible to appropriately provide auxiliary braking force.

The electric hydraulic brake according to an embodiment of the present disclosure may further include Electronic Parking Brakes (EPB) 31 and 32 mounted on one or more wheels. In an embodiment of the present disclosure, the electronic parking brakes 31 and 32 are exemplified as being integrally mounted on the two wheel brakes w1 and w2 of the rear wheels. The two electronic parking brakes 31 and 32 may be configured to be controlled by the electrical signals of the first controller 10 and the second controller 20.

For example, when the main braking unit 100 malfunctions, the hydraulic controller 200 and the EPBs 31 and 32 perform braking. When the hydraulic controller 200 malfunctions, the main braking unit 100 and the EPBs 31 and 32 perform braking. When the EPBs 31 and 32 malfunction, the main braking unit 100, the hydraulic controller 200, and the EPBs 31 and 32 may be hydraulically and electrically configured such that the main braking unit 100 and the hydraulic controller 200 may perform a redundancy function.

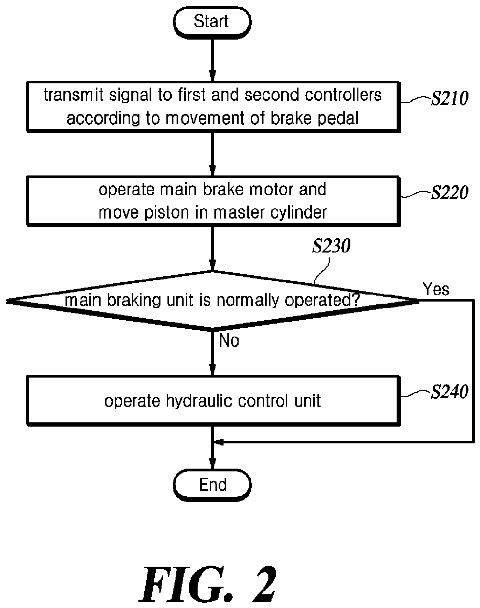

FIG. 2 is a flowchart illustrating a method of controlling an electric hydraulic brake according to an embodiment of the present disclosure.

Referring to FIG. 2, the electric hydraulic brake 1 according to an embodiment of the present disclosure transmits a signal to the first controller 10 and the second controller 20 according to the movement of the brake pedal 121 (S210).

The first controller 10 senses the moving distance and speed of the brake pedal 121 using a pedal stroke sensor or the like, and operates the main brake motor 122 based on the sensed moving distance and speed to move a piston in the master cylinder 120 forwards and backwards (S220).

The first controller 10 or the second controller 20 determines whether the main braking unit 100 is normally operated (S230). When the main braking unit 100 is normally operated, the brake oil depressurizes or pressurizes the wheel brakes w1, w2, w3, and w4 according to the movement of the piston in the master cylinder 120.

When the main braking unit 100 is not operated normally, the first controller 10 or the second controller 20 operates the auxiliary brake motor 230 or controls the outlet valves 261 to 264 to aid in controlling the main braking unit 100 (S240). When the main braking unit 100 is normally operated or a separate hydraulic controller 200 is operated to aid in controlling the main braking unit 100, this algorithm is terminated. The control method according to the pressurization or depressurization situation will be described in detail below.

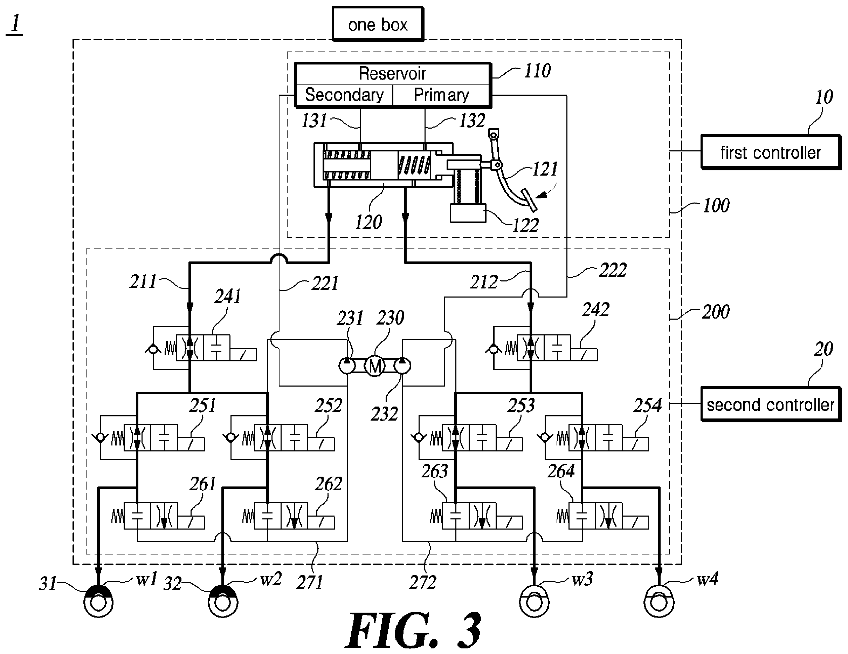

FIG. 3 is a hydraulic circuit diagram illustrating a direction in which brake oil flows when a main braking unit is normally operated in a braking process of an electric hydraulic brake according to an embodiment of the present disclosure.

Referring to FIG. 3, when a driver steps on the brake pedal 121, the main brake motor 122 is operated in proportion to the moving distance and speed of the brake pedal 121. If the main brake motor 122 is operated, the piston in the master cylinder 120 moves forwards (to the left of FIG. 3). As the piston moves forwards, the brake oil in the master cylinder 120 is pressurized and then transmitted along the main flow paths 211 and 222 to the wheel brakes w1, w2, w3, and w4 to generate braking force.

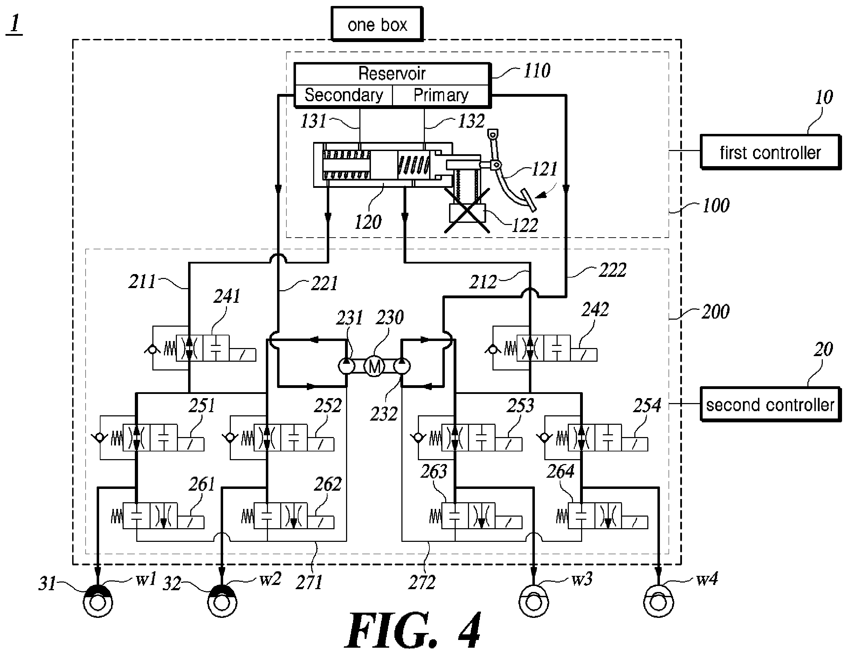

FIG. 4 is a hydraulic circuit diagram illustrating a direction in which brake oil flows when a main braking unit is abnormally operated in a braking process of an electric hydraulic brake according to an embodiment of the present disclosure.

Referring to FIG. 4, when the main braking unit 100 is abnormally operated, so that the delivered brake oil is insufficient compared to a required amount, the auxiliary brake motor 230 is operated to supplement insufficient brake oil. The auxiliary brake motor 230 directly sucks the brake oil from the reservoir 110 without passing through the master cylinder 120 using the pumps 231 and 232, and delivers the brake oil to the wheel brakes w1, w2, w3, and w4. The brake oil is transmitted by the pumps 231 and 232 along the auxiliary flow paths 221 and 222 to the wheel brakes w1, w2, w3, and w4, and generates braking force. At this time, the hydraulic pressure generated by the brake oil delivered from the master cylinder 120 and the brake oil delivered directly from the reservoir 110 by the pumps 231 and 232 may be regulated using the traction control valves 241 and 242.

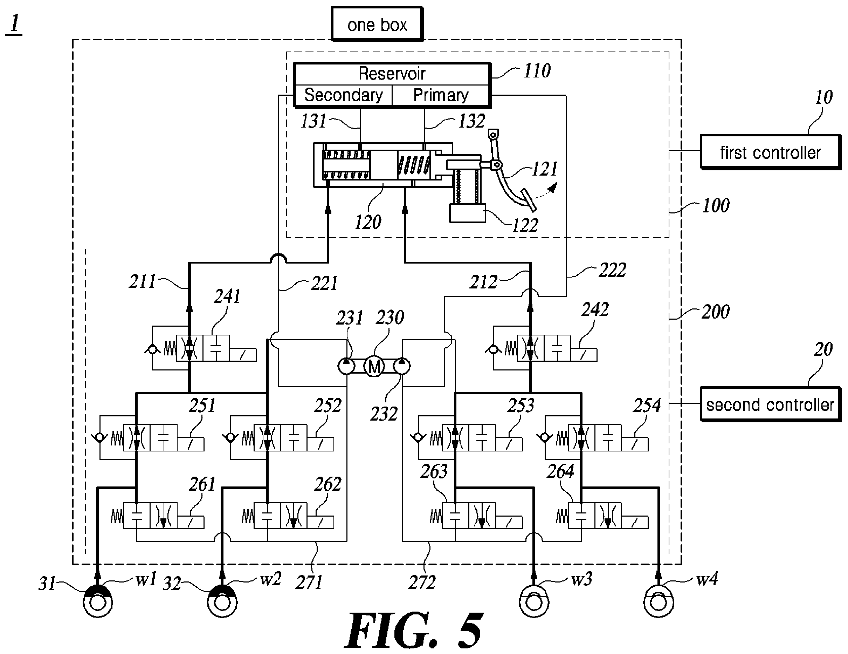

FIG. 5 is a hydraulic circuit diagram illustrating a direction in which brake oil flows when a main braking unit is normally operated in a depressurization process of an electric hydraulic brake according to an embodiment of the present disclosure.

Referring to FIG. 5, when a driver releases the brake pedal 121, the main brake motor 122 is operated in proportion to the moving distance and speed of the brake pedal 121. If the main brake motor 122 is operated, the piston in the master cylinder 120 moves backwards (to the right of FIG. 5). As the piston moves backwards, the brake oil on the wheel brakes w1, w2, w3, and w4 flows along the main flow paths 211 and 222 through the master cylinder 120 to return to the reservoir 110, and the pressure of the wheel brakes w1, w2, w3, and w4 is released.

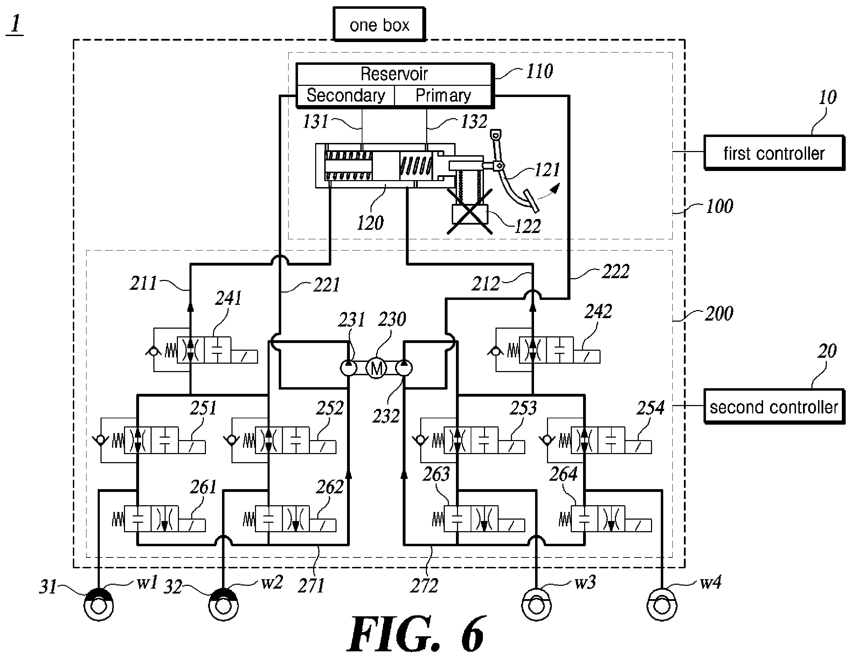

FIG. 6 is a hydraulic circuit diagram illustrating a direction in which brake oil flows when a main braking unit is abnormally operated in a depressurization process of an electric hydraulic brake according to an embodiment of the present disclosure.

Referring to FIG. 6, when the main braking unit 100 is abnormally operated, so that depressurization speed is insufficient, the first controller 10 or the second controller 20 controls the outlet valves 261 to 264. As the outlet valves 261 to 264 are opened, brake oil is transmitted along the return flow paths 271 and 272 to the reservoir 110 without passing through the master cylinder. The brake oil on the wheel brakes w1, w2, w3, and w4 is transmitted to the reservoir 110 by the main flow paths 211 and 212 and the return flow paths 271 and 272, and the pressure of the wheel brakes w1, w2, w3, and w4 is released.

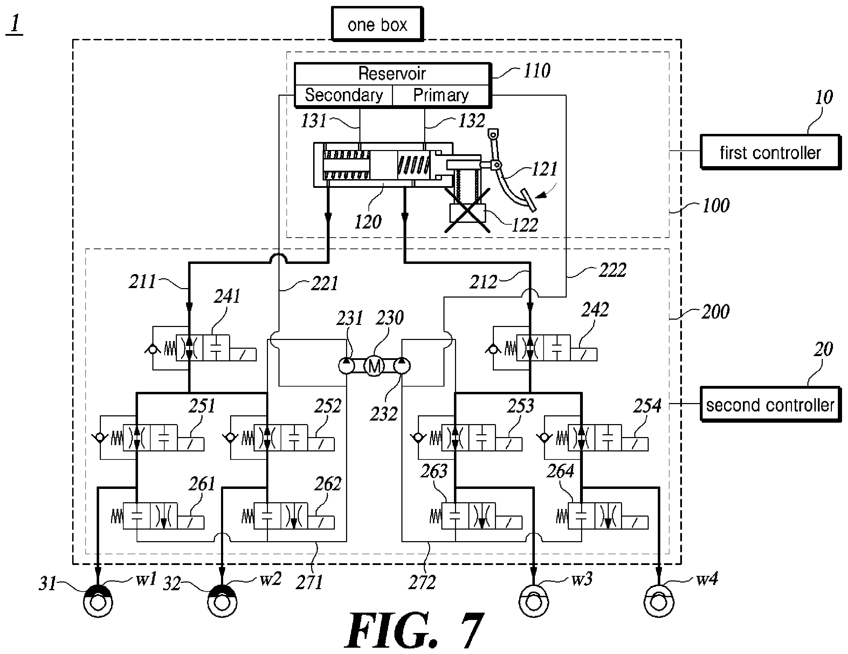

FIG. 7 is a hydraulic circuit diagram illustrating a direction in which brake oil flows when a main braking unit and a hydraulic controller are abnormally operated in a braking process of an electric hydraulic brake according to an embodiment of the present disclosure.

Referring to FIG. 7, when both the main braking unit 100 and the hydraulic controller 200 are abnormally operated, the piston is moved forwards (to the left of FIG. 7) only by pedal effort. As the piston moves forwards, the brake oil in the master cylinder 120 is pressurized, so that the brake oil is transmitted along the main flow paths 211 and 222 to the wheel brakes w1, w2, w3, and w4 and generates braking force.

According to an embodiment, an electric hydraulic brake is advantageous in that a brake system is formed in a one-box, thus simplifying a brake piping layout, reducing the number of components, and thereby reducing cost.

Although exemplary embodiments of the present disclosure have been described for illustrative purposes, those skilled in the art will appreciate that various modifications, additions, and substitutions are possible within the scope of the appended claims. Therefore, exemplary embodiments of the present disclosure have been described for the sake of brevity and clarity. The scope of the present invention is defined by the appended claims.

## Claims

1. An electric hydraulic brake (1) comprising:
a plurality of wheel brakes (w1, w2, w3, w4) configured to supply braking force to wheels of a vehicle;
a main braking unit (100) comprising a reservoir (110) which stores brake oil, and a master cylinder (120) configured to form pressure of the brake oil in conjunction with a main brake motor (122); and
a hydraulic controller (200) comprising at least one pump (231) configured to pump the brake oil in conjunction with an auxiliary brake motor (230), and configured to selectively transmit the pressure of the brake oil formed in the master cylinder (120) or the pump (231) to the plurality of wheel brakes (w1, w2, w3, w4),
**characterized in that**:
the hydraulic controller (200) comprises at least one auxiliary flow path (221, 222) which is connected at a first end thereof to the reservoir (110) and is connected at a second end thereof to an inlet of the pump (231) to transmit hydraulic pressure from the reservoir (110) to the pump (231) directly through the at least one auxiliary flow path (221, 222),
wherein the at least one auxiliary flow path (221, 222) is configured to directly guide the brake oil supplied from the reservoir (110) to the pump (231) without passing through the master cylinder (120).

2. The electric hydraulic brake (1) of claim 1, wherein the hydraulic controller (200) further comprises:
at least one main flow path (211, 212) transmitting hydraulic pressure formed in the master cylinder (120).

3. The electric hydraulic brake (1) of claim 2, wherein the hydraulic controller (200) further comprises:
at least one traction control valve (241, 242) configured to open or close the main flow path (211, 212), and control the pressure of the brake oil delivered from the master cylinder (120).

4. The electric hydraulic brake (1) of any one of claims 1 to 3, wherein the hydraulic controller (200) further comprises:
at least one inlet valve (251 to 254) and at least one outlet valve (261 to 264) for controlling the pressure of the brake oil delivered from the master cylinder (120) or the pump (231).

5. The electric hydraulic brake (1) of claim 4, wherein the hydraulic controller (200) further comprises:
at least one return flow path (271, 272) connected at a first end thereof to the auxiliary flow path (221, 222), and connected at a second end thereof to the outlet valve (261 to 264).

6. The electric hydraulic brake (1) of any one of claims 1 to 5, further comprising:
at least one supply flow path (131, 132) connecting the reservoir (110) and the master cylinder (120).

7. The electric hydraulic brake (1) of any one of claims 1 to 6, further comprising:
a first controller (10) configured to control the main brake motor (122) according to brake input; and
a second controller (20) configured to control the auxiliary brake motor (230) according to brake input when the first controller (10) or the main braking unit (100) malfunctions, and configured to control the pump (231) so as to transmit the pressure of the brake oil formed in the pump (231) to the plurality of wheel brakes (w1, w2, w3, w4).

8. The electric hydraulic brake (1) of claim 7, wherein the first controller (10) is configured to control the auxiliary brake motor (230) according to the brake input.

9. The electric hydraulic brake (1) of claim 7 or 8, further comprising:
an Electronic Parking Brake (EPB),
wherein the first controller (10) is configured to send an electrical signal to the EPB, when the main braking unit (100) or the first controller (10) malfunctions.

10. The electric hydraulic brake (1) of any one of claims 7 to 9, further comprising:
an Electronic Parking Brake (EPB),
wherein the second controller (20) is configured to send an electrical signal to the EPB, when the hydraulic controller (200) or the second controller (20) malfunctions.

11. A method of controlling an electric hydraulic brake (1) according to any of claims 1 to 10, the method comprising:
a transmission step (S210) of transmitting a brake signal to a first controller (10) and a second controller (20), when the brake signal is generated;
a determination step (S230) of determining whether a main braking unit (100) is normally operated according to the brake signal;
a main brake step of forming braking force in a plurality of wheel brakes (w1, w2, w3, w4) by operating the main braking unit (100), when it is determined that the main braking unit (100) is normally operated; and
an auxiliary brake step (S240) of forming braking force in the plurality of wheel brakes (w1, w2, w3, w4) by controlling the hydraulic controller (200), when it is determined that the main braking unit (100) is not normally operated.

## Patentansprüche

1. Elektrische hydraulische Bremse (1), umfassend:
eine Mehrzahl von Radbremsen (w1, w2, w3, w4), die dazu eingerichtet sind, eine Bremskraft auf Räder eines Fahrzeugs aufzubringen;
eine Hauptbremseinheit (100), die einen Vorratsbehälter (110), der Bremsöl speichert, und einen Hauptbremszylinder (120) umfasst, der dazu eingerichtet ist, in Verbindung mit einem Hauptbremsmotor (122) einen Druck des Bremsöls zu erzeugen; und
eine hydraulische Steuerung (200), die mindestens eine Pumpe (231) umfasst, die dazu eingerichtet ist, das Bremsöl in Verbindung mit einem Hilfsbremsmotor (230) zu pumpen, und dazu eingerichtet ist, selektiv den in dem Hauptbremszylinder (120) oder der Pumpe (231) erzeugten Druck des Bremsöls an die Mehrzahl von Radbremsen (w1, w2, w3, w4) zu übertragen,
**dadurch gekennzeichnet, dass**:
die hydraulische Steuerung (200) mindestens einen Hilfsströmungspfad (221, 222) umfasst, der an seinem ersten Ende mit dem Vorratsbehälter (110) verbunden ist und an seinem zweiten Ende mit einem Einlass der Pumpe (231) verbunden ist, um hydraulischen Druck vom Vorratsbehälter (110) direkt durch den mindestens einen Hilfsströmungspfad (221, 222) an die Pumpe (231) zu übertragen,
wobei der mindestens eine Hilfsströmungspfad (221, 222) dazu eingerichtet ist, das vom Vorratsbehälter (110) zugeführte Bremsöl direkt zur Pumpe (231) zu leiten, ohne den Hauptbremszylinder (120) zu passieren.

2. Elektrische hydraulische Bremse (1) nach Anspruch 1, wobei die hydraulische Steuerung (200) ferner umfasst:
mindestens einen Hauptströmungspfad (211, 212), der in dem Hauptbremszylinder (120) erzeugten hydraulischen Druck überträgt.

3. Elektrische hydraulische Bremse (1) nach Anspruch 2, wobei die hydraulische Steuerung (200) ferner umfasst:
mindestens ein Antriebsschlupfregelungsventil (241, 242), das dazu eingerichtet ist, den Hauptströmungspfad (211, 212) zu öffnen oder zu schließen und den von dem Hauptbremszylinder (120) abgegebenen Druck des Bremsöls zu steuern.

4. Elektrische hydraulische Bremse (1) nach einem der Ansprüche 1 bis 3, wobei die hydraulische Steuerung (200) ferner umfasst:
mindestens ein Einlassventil (251 bis 254) und mindestens ein Auslassventil (261 bis 264) zum Steuern des von dem Hauptbremszylinder (120) oder der Pumpe (231) abgegebenen Drucks des Bremsöls.

5. Elektrische hydraulische Bremse (1) nach Anspruch 4, wobei die hydraulische Steuerung (200) ferner umfasst:
mindestens einen Rückströmungspfad (271, 272), der an seinem ersten Ende mit dem Hilfsströmungspfad (221, 222) verbunden ist und an seinem zweiten Ende mit dem Auslassventil (261 bis 264) verbunden ist.

6. Elektrische hydraulische Bremse (1) nach einem der Ansprüche 1 bis 5, ferner umfassend:
mindestens einen Versorgungsströmungspfad (131, 132), der den Vorratsbehälter (110) und den Hauptbremszylinder (120) verbindet.

7. Elektrische hydraulische Bremse (1) nach einem der Ansprüche 1 bis 6, ferner umfassend:
eine erste Steuerung (10), die dazu eingerichtet ist, den Hauptbremsmotor (122) gemäß einer Bremseingabe zu steuern; und
eine zweite Steuerung (20), die dazu eingerichtet ist, den Hilfsbremsmotor (230) gemäß einer Bremseingabe zu steuern, wenn die erste Steuerung (10) oder die Hauptbremseinheit (100) fehlerhaft arbeitet, und dazu eingerichtet ist, die Pumpe (231) so zu steuern, dass der in der Pumpe (231) erzeugte Druck des Bremsöls an die Mehrzahl von Radbremsen (w1, w2, w3, w4) übertragen wird.

8. Elektrische hydraulische Bremse (1) nach Anspruch 7, wobei die erste Steuerung (10) dazu eingerichtet ist, den Hilfsbremsmotor (230) gemäß der Bremseingabe zu steuern.

9. Elektrische hydraulische Bremse (1) nach Anspruch 7 oder 8, ferner umfassend: eine elektrische Feststellbremse, EPB,
wobei die erste Steuerung (10) dazu eingerichtet ist, ein elektrisches Signal an die EPB zu senden, wenn die Hauptbremseinheit (100) oder die erste Steuerung (10) fehlerhaft arbeitet.

10. Elektrische hydraulische Bremse (1) nach einem der Ansprüche 7 bis 9, ferner umfassend:
eine elektrische Feststellbremse, EPB,
wobei die zweite Steuerung (20) dazu eingerichtet ist, ein elektrisches Signal an die EPB zu senden, wenn die hydraulische Steuerung (200) oder die zweite Steuerung (20) fehlerhaft arbeitet.

11. Verfahren zum Steuern einer elektrischen hydraulischen Bremse (1) nach einem der Ansprüche 1 bis 10, wobei das Verfahren umfasst:
einen Übertragungsschritt (S210) zum Übertragen eines Bremssignals an eine erste Steuerung (10) und eine zweite Steuerung (20), wenn das Bremssignal erzeugt wird;
einen Bestimmungsschritt (S230) zum Bestimmen, ob eine Hauptbremseinheit (100) gemäß dem Bremssignal normal betrieben wird;
einen Hauptbremsschritt zum Erzeugen von Bremskraft in einer Mehrzahl von Radbremsen (w1, w2, w3, w4) durch Betreiben der Hauptbremseinheit (100), wenn bestimmt wird, dass die Hauptbremseinheit (100) normal betrieben wird; und
einen Hilfsbremsschritt (S240) zum Erzeugen von Bremskraft in der Mehrzahl von Radbremsen (w1, w2, w3, w4) durch Steuern der hydraulischen Steuerung (200), wenn bestimmt wird, dass die Hauptbremseinheit (100) nicht normal betrieben wird.

## Revendications

1. Frein hydraulique électrique (1) comprenant:
une pluralité de freins de roue (w1, w2, w3, w4) conçue pour fournir une force de freinage aux roues d'un véhicule;
une unité de freinage principale (100) comprenant un réservoir (110) qui stocke l'huile de frein, et un maître-cylindre (120) conçu pour former une pression de l'huile de frein en relation avec un moteur de frein principal (122); et
une commande hydraulique (200) comprenant au moins une pompe (231) conçue pour pomper l'huile de frein en relation avec un moteur de frein auxiliaire (230), et conçue pour transmettre de manière sélective la pression de l'huile de frein formée dans le maître-cylindre (120) ou la pompe (231) à la pluralité de freins de roue (w1, w2, w3, w4),
**caractérisé en ce que**:
la commande hydraulique (200) comprend au moins un chemin d'écoulement auxiliaire (221, 222) qui est relié par sa première extrémité au réservoir (110) et par sa seconde extrémité à une entrée de la pompe (231) afin de transmettre la pression hydraulique du réservoir (110) à la pompe (231) directement par l'au moins un chemin d'écoulement auxiliaire (221, 222),
dans lequel l'au moins un chemin d'écoulement auxiliaire (221, 222) est conçu pour guider directement l'huile de frein fournie par le réservoir (110) vers la pompe (231) sans passer par le maître-cylindre (120).

2. Frein hydraulique électrique (1) selon la revendication 1, dans lequel la commande hydraulique (200) comprend:
au moins un chemin d'écoulement principal (211, 212) transmettant la pression hydraulique formée dans le maître-cylindre (120).

3. Frein hydraulique électrique (1) selon la revendication 2, dans lequel la commande hydraulique (200) comprend en outre:
au moins une soupape de régulation de traction (241, 242) conçue pour ouvrir ou fermer le chemin d'écoulement principal (211, 212) et réguler la pression de l'huile de frein délivrée par le maître-cylindre (120).

4. Frein hydraulique électrique (1) selon l'une quelconque des revendications 1 à 3, dans lequel la commande hydraulique (200) comprend en outre:
au moins une soupape d'admission (251 à 254) et au moins une soupape d'échappement (261 à 264) pour réguler la pression de l'huile de frein délivrée par le maître-cylindre (120) ou la pompe (231).

5. Frein hydraulique électrique (1) selon la revendication 4, dans lequel la commande hydraulique (200) comprend en outre:
au moins un chemin d'écoulement de retour (271, 272) relié par sa première extrémité au chemin d'écoulement auxiliaire (221, 222), et relié par une seconde extrémité à la soupape de sortie (261 à 264).

6. Frein hydraulique électrique (1) selon l'une quelconque des revendications 1 à 5, comprenant en outre:
au moins un chemin d'écoulement d'alimentation (131, 132) reliant le réservoir (110) et le maître-cylindre (120).

7. Frein hydraulique électrique (1) selon l'une quelconque des revendications 1 à 6, comprenant en outre:
un premier dispositif de commande (10) conçu pour commander le moteur de frein principal sur la base d'une entrée de freinage; et
un deuxième dispositif de commande (20) conçu pour commander le moteur de frein auxiliaire (230) en fonction de l'entrée de freinage lorsque le premier dispositif de commande (10) ou l'unité de freinage principale (100) fonctionne mal, et conçu pour commander la pompe (231) de manière à transmettre la pression de l'huile de frein formée dans la pompe (231) à la pluralité de freins de roue (w1, w2, w3, w4).

8. Frein hydraulique électrique (1) selon la revendication 7, dans lequel le premier dispositif de commande (10) est conçu pour commander le moteur de frein auxiliaire (230) en fonction de l'entrée de freinage.

9. Frein hydraulique électrique (1) selon la revendication 7 ou 8, comprenant en outre:
un frein de stationnement électronique (EPB),
dans lequel le premier dispositif de commande (10) est conçu pour envoyer un signal électrique à l'EPB lorsque l'unité de freinage principale (100) ou le premier dispositif de commande (10) fonctionne mal.

10. Frein hydraulique électrique (1) selon l'une quelconque des revendications 7 à 9, comprenant en outre:
un frein de stationnement électrique (EPB),
dans lequel le deuxième dispositif de commande (20) est conçu pour envoyer un signal électrique à l'EPB lorsque la commande hydraulique (200) ou le deuxième dispositif de commande (20) fonctionne mal.

11. Procédé de commande d'un frein hydraulique électrique (1) selon l'une quelconque des revendications 1 à 10, le procédé comprenant:
une étape de transmission (S210) consistant à transmettre un signal de freinage à un premier dispositif de commande (10) et à un deuxième dispositif de commande (20), lorsque le signal de freinage est généré;
une étape de détermination (S230) consistant à déterminer si une unité de freinage principale (100) fonctionne normalement conformément au signal de freinage;
une étape de freinage principal consistant à générer une force de freinage dans une pluralité de freins de roue (w1, w2, w3, w4) par actionnement de l'unité de freinage principal (100), lorsqu'il est déterminé que l'unité de freinage principal (100) est actionnée normalement; et
une étape de freinage auxiliaire (S240) consistant à former une force de freinage dans la pluralité de freins de roue (w1, w2, w3, w4) par commande de la commande hydraulique (200), lorsqu'il est déterminé que l'unité de freinage principale (100) ne fonctionne pas normalement.
